# EUROPÄISCHE PATENTSCHRIFT

(11) **EP 0 864 468 B1**
(45) Veröffentlichungstag und Bekanntmachung des Hinweises auf die Patenterteilung: **04.12.2002**
(21) Anmeldenummer: 98104002.5
(22) Anmeldetag: 06.03.1998
(51) Int. Cl.: B60R 21/26, B60R 21/20

(54) **Airbag mit Gaserzeuger**
Airbag with gas generator
Sac gonflable de sécurité avec générateur de gaz

(30) Priorität: 12.03.1997 DE 19710063
(43) Veröffentlichungstag der Anmeldung: 16.09.1998
(73) Patentinhaber: TRW Automotive Safety Systems GmbH, 63743 Aschaffenburg (DE)
(72) Erfinder: Kreuzer, Martin, 63839 Kleinwallstadt (DE); Kehler, Reinhold, 63856 Bessenbach 1 (DE); Heeg, Norbert, 64832 Babenhausen (DE)
(74) Vertreter: Degwert, Hartmut, Dipl.-Phys.

(56) Entgegenhaltungen:
- EP-A- 0 422 840
- DE-A- 4 116 880
- DE-A- 19 528 970
- DE-C- 4 134 995
- US-A- 5 498 030
- US-A- 5 516 146
- US-A- 5 687 988

## Beschreibung

Die Erfindung betrifft eine Vorrichtung zum Schutze von Fahrzeuginsassen bei einem Unfall mit Gaserzeuger und Airbag.

Bei herkömmlichen Vorrichtungen dieser Art ist der zusammengefaltete Airbag in vielen Fällen außen am Gaserzeuger befestigt, der seinerseits so ausgebildet ist, daß er am Einbauort direkt oder unter Zwischenschaltung von Befestigungsmitteln mit der Fahrzeugkarosserie verbunden werden kann. Bei anderen Ausführungsformen sind Airbag und Gaserzeuger in einem Gehäuse befestigt, das seinerseits zu befestigen ist. Dabei kann der Airbag über eine Vielzahl von Verbindungsstellen am Gaserzeuger und/oder am Gehäuse befestigt sein, oder aber den Airbag bzw. eine Halterung im Gehäuse mit einer Halteschlaufe umschlingen, wodurch im Falle einer Zündung des Airbags eine gleichmäßigere Übertragung der Haltekräfte bewirkt und ein Ausreißen punktförmiger Verbindungsstellen vermieden wird.

Aus der EP-A-0 819 586, einem Stand der Technik nach Art.54(3) und (4) EPÜ, ist ein innerhalb eines Airbags angeordneter Gaserzeuger bekannt. Der Gaserzeuger befindet sich in einer langgestreckten Wanne, die mehrere Befestigungsbolzen aufweist, mittels derer der Airbag zusammen mit dem Gaserzeuger beispielsweise an einem Rahmen eines Fahrzeugsitzes befestigt werden kann.

Aus der DE-A-195 28 970 ist ein Gaserzeuger bekannt, der mit Hilfe von Halteschnüren innerhalb eines Airbags befestigt ist. Ein Halter oder dergleichen zum Festlegen des Gaserzeugers ist nicht vorgesehen.

Aus der US-PS 5 310 216 ist ein Airbag mit einer umlaufenden Naht bekannt geworden, bei dem zwei einstückig ausgebildete Befestigungslaschen vorgesehen sind, die um einen rohrförmigen Gasgenerator herumgelegt sind, einander endseitig überlappen und eine Mehrzahl miteinander korrespondierender Löcher aufweisen, die mit Befestigungsbolzen am Gaserzeuger korrespondieren und zur Befestigung des Airbags am Gaserzeuger dienen. Dabei werden nach wie vor punktförmig wirkende Befestigungsmittel verwendet, die bei Zündung des Airbags zu örtlichen Belastungsspitzen führen, an denen die Befestigungslaschen ausreißen können. Davon abgesehen ist diese bekannte Vorrichtung wegen der Vielzahl von Verbindungspunkten herstellungstechnisch sehr aufwendig.

Diese bekannte Vorrichtung entspricht daher noch nicht den heutigen Vorstellungen zur Gestaltung von Airbag-Modulen, bei denen man insbesondere auf eine in jeder Hinsicht rationelle Fertigung achtet, damit die Einführung weiterer Verbesserungen der passiven Sicherheit im Fahrzeug durch Anordnung einer größeren Zahl von Airbags für Fahrer und Beifahrer nicht an den Kosten scheitert. Mit anderen Worten, der zusätzliche Schutz der Fahrzeuginsassen soll möglichst den Kostenrahmen bisheriger Sicherheitssysteme nicht überschreiten.

Daraus ergibt sich die Aufgabe, die Vorrichtungen so auszulegen, daß der angestrebte Schutz uneingeschränkt, also möglichst preiswert erreicht werden kann, d.h. Airbag-Module konstruktiv und herstellungstechnisch möglichst weitgehend zu vereinfachen.

Zur Lösung dieser Aufgabe wird erfindungsgemäß vorgeschlagen, daß bei einer Vorrichtung der eingangs genannten Art der Airbag durch eine randseitig umlaufende Naht im wesentlichen vollständig geschlossen ist und der Gaserzeuger mit einem Halteblech verbunden ist, wobei der Gaserzeuger und das Halteblech vollständig innerhalb des Airbags angeordnet sind und das Halteblech sich mit einem Halteflansch zwischen die übereinandergelegten und randseitig miteinander verbundenen Endbereiche des Airbags erstreckt, In den Endbereichen des Airbags und in dem Halteflansch sind zwei oder mehr miteinander korrespondierende Löcher für das Hindurchstecken einer Befestigungsschraube oder dergl. vorgesehen.

Dies hat den Vorteil, daß Gaserzeuger und Airbag mittels der am Airbag ohnehin erforderlichen Naht zu einer Bauart zusammengefaßt werden, die nunmehr als Ganzes gehandhabt und für eine gemeinsame Befestigung in einem Gehäuse oder Einbauraum einer Fahrzeugkarosserie ausgestaltet werden kann. Eine wie auch immer geartete, gesonderte Befestigung am Gaserzeuger entfällt, womit bereits erhebliche Einsparungen bei den Herstellungskosten erzielt werden können.

Ein weiterer Vorteil besteht darin, daß es möglich ist, den Airbag bei der erforderlichen Festlegung des Gaserzeugers in einem Gehäuse oder in einem Einbauraum gleichzeitig mit zu befestigen und zwar materialgerecht, d.h. großflächig und nicht nur punktförmig, so daß ein Ausreißen an den Befestigungsstellen bei Zündung des Airbags mit Sicherheit vermieden werden kann.

Durch die randseitig umlaufende Naht muß lediglich eine Zündleitung aus dem im übrigen geschlossenen Airbag herausgeführt werden.

Bei der erfindungsgemäßen Befestigungsart wird der Airbag zwischen dem innenliegenden Halteblech und außenliegenden Karosserieteilen am Einbauort großflächig eingespannt, indem das Halteblech zusammen mit dem daran befestigten Gaserzeuger an einem außenliegenden Konstruktionsteil (Karosserie oder Gehäuse) angeschraubt wird.

Vorteilhafte Ausgestaltungen und Abwandlungen des Erfindungsgedankens sind in den Unteransprüchen beschrieben. Weitere Einzelheiten werden anhand der in den Fig. 1 - 5 dargestellten Ausführungsbeispiele näher erläutert. Es zeigen:
- Fig. 1: eine Ansicht eines halbfertigen Airbag-Moduls gemäß der Erfindung in stark vereinfachter Darstellung,
- Fig. 2: eine Ansicht des Airbag-Moduls gemäß Fig. 1 nach Fertigstellung der randseitig umlaufenden Naht,
- Fig. 3: einen Teilschnitt durch das Airbag-Modul gemäß Fig. 2 in vergrößerter Darstellung,

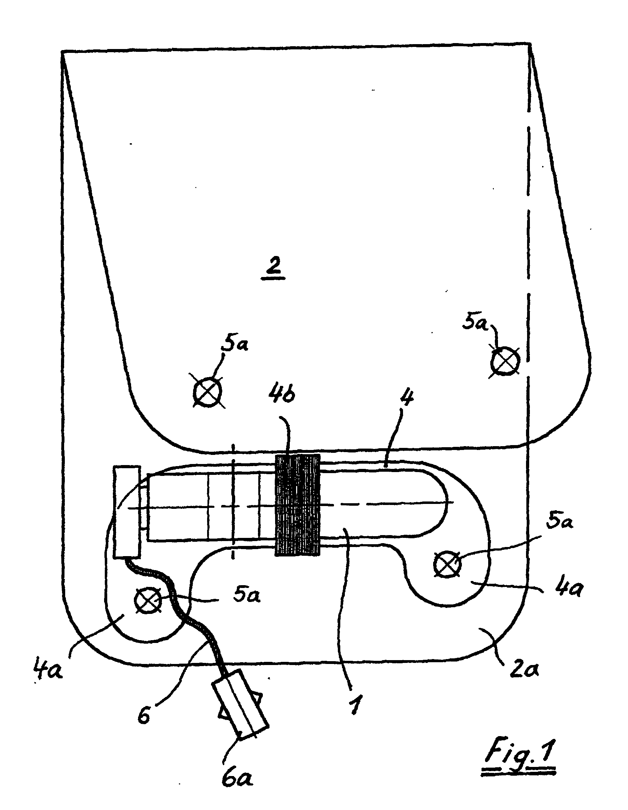

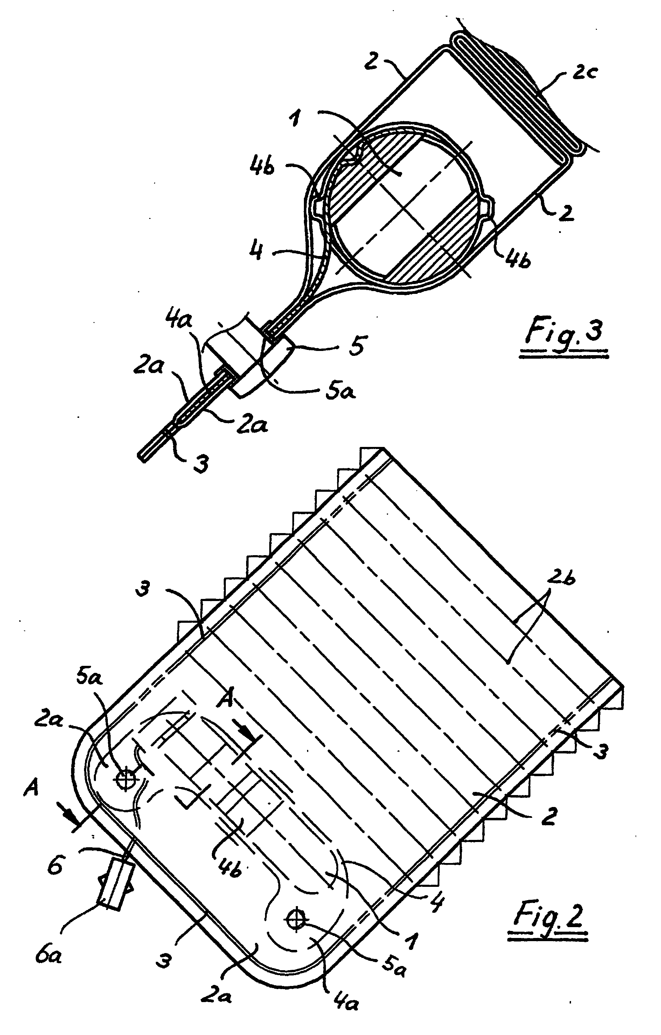

Bei dem Ausführungsbeispiel gemäß Fig. 1 besteht der Materialzuschnitt für den Airbag aus einem langgestreckt rechteckigen Teil, der in der Mitte gefaltet aber noch nicht dekkend übereinandergelegt ist. Auf den unteren Teil des Materialabschnitts ist ein Halteblech 4 aufgelegt, das ebenso wie die untere und die obere Hälfte des Materialabschnitts korrespondierende Befestigungslöcher 5a aufweist, durch die bei der Montage Befestigungsschrauben oder dergl. hindurchgesteckt werden können (vergl. Fig. 3). Diese Löcher 5a sind in den Endbereichen 2a des Airbags 2 und in Halteflanschen 4a des Halteblechs 4 angeordnet. Der rohrförmige Gaserzeuger 1 ist mittels einer Rohrschelle 4b am Halteblech 4 befestigt. Die Zündleitung 6 mit einem Anschlußstecker 6a ist einerseits mit dem Zünder des Gaserzeugers 1 verbunden, andererseits über den Rand des Materialabschnitts nach außen geführt.

Fig. 2 zeigt das Airbag-Modul gemäß Fig. 1, nachdem die randseitig umlaufende Naht 3 hergestellt wurde.. Halteblech 4 und Gaserzeuger 1 sind nunmehr unverlierbar im allseitig geschlossenen Airbag untergebracht und es führt lediglich noch die Zündleitung 6 aus dem Airbag 2 heraus. Angedeutet sind noch die Halteflansche 4a des Halteblechs 4 und die Rohrschelle 4b, mit der der Gaserzeuger 1 am Halteblech 4 befestigt ist. Die Löcher 5a sind korrespondierend zueinander sowohl im unteren wie im oberen Teil des Materialzuschnitts für den Airbag 2 wie auch in den Halteflanschen 4a des Halteblechs 4 ausgebildet. Angedeutet sind ferner noch die Faltlinien, längs derer der Airbag 2 in seine raumsparende Stauform gebracht wird.

Fig. 3 ist ein Teilschnitt längs der Linie A-A in Fig. 2, aus dem insbesondere ersichtlich ist, wie die Endbereiche 2a des Airbags 2 unter Zwischenlage des Halteflansches 4a am Halteblech 4 so übereinandergelegt sind, daß eine Befestigungsschraube 5 oder dergl. durch die zueinander korrespondierenden Löcher 5a im Airbag 2 und Halteblech 4 hindurchgesteckt werden kann. Im Inneren des Airbags 2 ist der rohrförmige Gaserzeuger 1 mittels einer Rohrschelle 4b am Halteblech 4 befestigt, das wannenartig ausgebildet sein kann, um gleichzeitig eine Festlegung des Gaserzeugers 1 in Längsrichtung erreichen zu können. Rechts oberhalb vom Gaserzeuger 1 ist der zusammengefaltete Teil 2c des Airbags 2 dargestellt.

## Patentansprüche

1. Vorrichtung zum Schutze von Fahrzeuginsassen bei einem Unfall mit einem Gaserzeuger (1) und einem Airbag (2), der durch eine randseitig umlaufende Naht (3) im wesentlichen vollständig geschlossen ist, wobei der Gaserzeuger (1) mit einem Halteblech (4) verbunden ist, der Gaserzeuger (1) und das Halteblech (4) vollständig innerhalb des Airbags (2) angeordnet sind und das Halteblech (4) sich mit einem Halteflansch (4a) zwischen die übereinandergelegten und randseitig miteinander verbundenen Endbereiche (2a) des Airbags (2) erstreckt, und wobei in den Endbereichen (2a) und in dem Halteflansch (4a) zwei oder mehr miteinander korrespondierende Löcher (5a) für das Hindurchstecken einer Befestigungsschraube (5) oder dergl. vorgesehen sind.

2. Vorrichtung nach Anspruch 1, **dadurch gekennzeichnet, daß** der Gaserzeuger (1) einen Druckgasbehälter, einen pyrotechnischen Treibsatz und einen Zünder umfaßt, der mit einer durch die umlaufende Naht (3) nach außen geführten Zündleitung (6) verbunden ist.

3. Vorrichtung nach Anspruch 1 oder 2, **dadurch gekennzeichnet, daß** das Halteblech (4) durch die Löcher (5a) und/oder die randseitig umlaufende Naht (3) innerhalb des Airbags (2) örtlich festgelegt ist.

4. Vorrichtung nach einem der Ansprüche 1 bis 3, **dadurch gekennzeichnet, daß** der Gaserzeuger (1) im wesentlichen rohrförmig ausgebildet ist, daß das Halteblech (4) eine den Gaserzeuger (1) teilweise umgreifende und in axialer Richtung festlegende Form aufweist und daß der Gaserzeuger (1) durch eine Rohrschelle (4b) oder dergl. mit dem Halteblech verbunden ist.

## Claims

1. A device including a gas generator (1) and an airbag (2) for protecting vehicle occupants in the event of an accident, the airbag (2) being essentially closed all the way around by a seam (3) extending along the edge, the gas generator (1) being connected to a sheet metal holder (4), the gas generator (1) and the sheet metal holder (4) being arranged entirely inside the airbag (2), and the sheet metal holder (4) having a holding flange (4a) extending between the superimposed end portions (2a) of the airbag (2) which are connected together at the edges, and the end portions (2a) and the holding flange (4a) being provided with two or more mutually aligned holes (5a) that accommodate fastening bolts (5) or the like.

2. The device according to claim 1, **characterized in that** the gas generator (1) comprises a compressed-gas reservoir, a pyrotechnical propellant charge, and an igniter connected to an ignition line (6) that extends out through the seam (3) extending along the edge.

3. The device according to claim 1 or 2, **characterized in that** the sheet metal holder (4) is secured in place inside the airbag (2) by the holes (5a) and/or by the seam (3) that extends along the edge.

4. The device according to any of claims 1 to 3, **characterized in that** the gas generator (1) is made substantially tubular, that the sheet metal holder (4) is shaped such that it partly surrounds the gas generator (1) and secures it in the axial direction, and that the gas generator (1) is connected to the sheet metal holder by a pipe clamp (4b) or the like.

## Revendications

1. Dispositif de protection d'occupants d'un véhicule lors d'un accident, comportant un générateur de gaz (1) et un coussin à gaz (2) qui est fermé sensiblement sur toute la périphérie par une couture (3) de lisière, le générateur de gaz (1) étant relié à une tôle de retenue (4), le générateur de gaz (1) et la tôle de retenue (4) étant agencés entièrement à l'intérieur du coussin à gaz (2), et la tôle de retenue (4) s'étendant avec une bride de retenue (4a) entre les zones d'extrémité (2a) du coussin à gaz (2) superposées et reliées l'une à l'autre sur la lisière, et deux ou plusieurs trous (5a) alignés les uns aux autres étant prévus dans les zones d'extrémité (2a) et dans la bride de retenue (4a) pour y faire passer une vis de fixation (5) ou similaire.

2. Dispositif selon la revendication 1, **caractérisé en ce que** le générateur de gaz (1) comprend un réservoir de gaz de pression, une charge de propulsion pyrotechnique et une amorce qui est reliée à une conduite d'amorçage (6) menée vers l'extérieur à travers une couture (3) périphérique.

3. Dispositif selon la revendication 1 ou 2, **caractérisé en ce que** la tôle de retenue (4) est immobilisée en place par les trous (5a) et/ou par la couture (3) de lisière périphérique à l'intérieur du coussin à gaz (2).

4. Dispositif selon l'une des revendications 1 à 3, **caractérisé en ce que** le générateur de gaz (1) est réalisé de forme sensiblement tubulaire, **en ce que** la tôle de retenue (4) présente une forme telle qu'il entoure partiellement le générateur de gaz (1) et l'immobilise en direction axiale, et **en ce que** le générateur de gaz (1) est relié à la tôle de retenue par un collier d'attache (4b) ou similaire.
